# EUROPÄISCHE PATENTSCHRIFT

(11) **EP 1 068 101 B1**
(45) Veröffentlichungstag und Bekanntmachung des Hinweises auf die Patenterteilung: **16.10.2002**
(21) Anmeldenummer: 99914547.7
(22) Anmeldetag: 26.03.1999
(51) Int. Cl.: B60R 11/00

(54) **BEHÄLTER ZUR GERÄUSCHDÄMPFENDEN AUFNAHME EINES IN EIN FAHRZEUG EINZUBAUENDEN AGGREGATES**
RECEPTACLE FOR SOUND-DAMPING ACCOMMODATION OF A UNIT WHICH CAN BE INSTALLED IN A MOTOR VEHICLE
RECIPIENT POUR LOGEMENT SILENCIEUX D'UN GROUPE A MONTER DANS UN VEHICULE

(30) Priorität: 08.04.1998 DE 19815706
(43) Veröffentlichungstag der Anmeldung: 17.01.2001
(73) Patentinhaber: DaimlerChrysler AG, 70567 Stuttgart (DE)
(72) Erfinder: POLIC, Marko, D-71067 Sindelfingen (DE); WEIKERT, Günther, D-71134 Aidlingen (DE)
(86) Internationale Anmeldenummer: EP9902078
(87) Internationale Veröffentlichungsnummer: WO99052742

(56) Entgegenhaltungen:
- EP-A- 0 448 783
- DE-A- 4 237 870
- DE-A- 4 340 007
- DE-A- 4 422 384

## Beschreibung

Die Erfindung betrifft einen Behälter zur geräuschdämpfenden Aufnahme eines in ein Fahrzeug einzubauenden Aggregates, wie Elektromotor, pneumatische Pumpe oder dgl., der aus zwei jeweils durch Schaumteile gebildeten und sich zu einem geschlossenen Gehäuse ergänzenden Behälterteilen besteht und der zur Montage an benachbarten Fahrzeugteilen mit der Fahrzeugkarosserie verklipsbar ist.

In Fahrzeuge einzubauende Aggregate, wie pneumatisch arbeitende Pumpen, Elektromotoren, Hydraulikaggregate und dgl., die während ihres Betriebes relativ laute Betriebsgeräusche erzeugen, sind von dem sie aufnehmenden Träger, bspw. eines Karosserieteiles eines Kraftfahrzeuges, schwingungsmäßig abzukoppeln, um eine Übertragung von Körperschall zumindest weitgehend zu unterbinden und Luftschall erheblich zu minimieren.

Hierzu ist es aus dem gattungsgemässen DE-A-4 422 384 bekannt, solche Aggregate in einen aus geschäumtem Kunststoff hergestellten und aus wenigstens zwei Teilen bestehenden Behälter einzubetten, der zu seiner Festlegung im Fahrzeug an benachbarten Fahrzeugteilen dauerhaft eingeklemmt, verrastet oder eingeschnappt bzw. eingeklipst wird.

Aufgabe der vorliegenden Erfindung ist es, einen die im Oberbegriff des Anspruches 1 erläuterten Merkmale aufweisenden Behälter vorzuschlagen, für dessen sicheren Verschluß und Festlegung im Fahrzeug auf gesondert vorzusehende Verschluß- und Befestigungselemente verzichtet werden kann.

Diese Aufgabe wird erfindungsgemäß gelöst durch einen teilweise in den einen Behälterteil durch Einschäumen integrierten, U-förmigen Halter, dessen U-Schenkel an einander gegenüberliegenden Wandteilen des ihn tragenden Behälterteils jeweils ein sich über dessen Öffnungsrand hinaus erstreckendes Klipselement zum gegenseitigen Verklipsen beider Behälterteile sowie jeweils einen von diesen Wandteilen nach außen abragenden Flansch zur Behälterbefestigung in einem Karosseriedurchbruch aufweisen, welchen Flanschen an ihrer vom jeweiligen Klipselement abgekehrten Seite jeweils wenigstens eine seitlich vom Behälterteil nach außen abragende und an eine im U-Schenkel freigeschnittene Federzunge angeformte Abstützschulter zugeordnet ist, die sich bei montiertem Behälter an einem sich zwischen Flansch und Abstützschulter befindenden Randteil des Karosseriedurchbruches abstützt.

Die Anordnung des am einen Behälterteil vorgesehenen Halters und dessen Ausstattung mit zugleich zum gegenseitigen Verklipsen beider Behälterteile dienenden U-Schenkeln ermöglicht ein denkbar einfaches Behälterhandling, sowohl zum Öffnen und Verschließen des Behälters als auch zu dessen Montage und Demontage, wobei als hierzu erforderliches Mittel lediglich ein in den einen Behälterteil integrierter U-förmiger Halter vorgesehen ist.

Die erfindungsgemäße Konstruktion gestattet es demgemäß, auch mit einer geringen Anzahl von Einzelteilen und Teilenummern auszukommen.

Einen gewichtsmäßigen Vorteil läßt sich dabei erzielen, wenn der Halter durch ein Kunststoffhartteil gebildet ist, das vorzugsweise aus glasfaserverstärktem Polyamid (PA6) gespritzt ist.

Um beim Einsetzen des Behälters in den Karosseriedurchbruch darauf verzichten zu können, die Federzungen zu dessen karosserieseitiger Verklipsung manuell entsprechend nach innen drücken zu müssen, ist es günstig, die Abstützschultern der U-Schenkel in entgegengesetzter Richtung zum benachbarten Flansch keilförmig verjüngt auszubilden.

Eine Ausbildung der Abstütztschultern dergestalt, dass diese jeweils durch eine Vielzahl von in seitlichem Abstand voneinander an die Federzungen der U-Schenkel angeformten Stegen gebildet sind, bietet den Vorteil, Kunststoff einzusparen.

Eine wirksame, selbsttätige Sicherung des Behälterdeckels in seiner Schließstellung läßt sich vorteilhaft bewerkstelligen, sofern die Klipselemente am freien Ende ein sich in Richtung auf den zu verklipsenden Behälterteil rechtwinklig erstreckendes Eingriffsglied aufweisen, das eine in den benachbarten Wandteil dieses Behälterteils eingeformte Abstützschulter übergreift.

Hierbei ist es günstig, wenn das Eingriffsglied den einen Schenkel eines im Querschnitt V-förmig ausgebildeten Endstückes der Klipselemente bildet, deren anderer Schenkel über den Behälterwandteil vorsteht und wenn die Abstützschulter des zu verklipsenden Behälterteils einen Wandteil einer im Querschnitt gleichfalls in etwa V-förmigen Vertiefung dieses Behälterteils bildet, in die das Eingriffsglied formschlüssig einrastbar ist.

In weiterer, vorteilhafter Ausgestaltung der Erfindung wird schließlich vorgeschlagen, die Gestaltung der Behälterteile so zu treffen, dass sie in gegenseitig verklipstem Zustand einen quaderförmigen Behälter bilden und den im Querschnitt U-förmigen Halter am einen Behälterteil derart vorzusehen, dass sich die Klipselemente seiner U-Schenkel jeweils an einer seiner Längswandteile über dessen Öffnungsrand hinaus erstrecken.

Weitere Vorteile sowie Einzelheiten der Erfindung sind aus der sich anschließenden Beschreibung eines in der Zeichnung dargestellten Ausführungsbeispieles der Erfindung zu entnehmen. Es zeigen:
- Figur 1: eine Seitenansicht des Behälters;

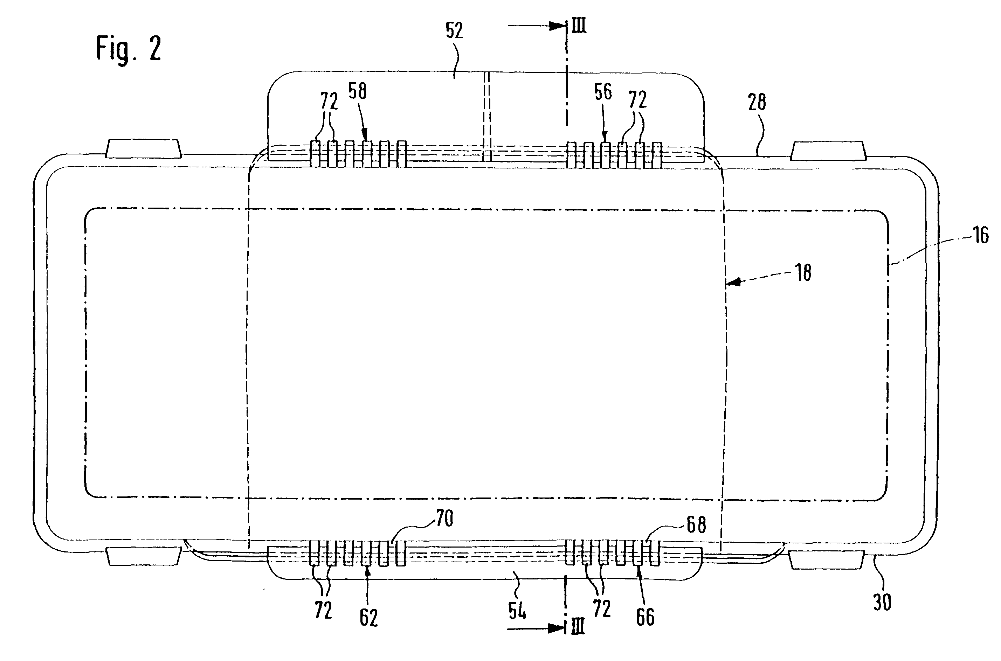

- Figur 2: eine bodenseitige Ansicht (Untersicht) des Behälters; und
- Figur 3: einen Behälterquerschnitt entlang der Linie III-III der Figur 2 gesehen.

Der in der Zeichnung gezeigte, vorzugsweise quaderförmig gestaltete Behälter 10 bildet ein Ausrüstungsteil bspw. für Kraftfahrzeuge für den schallgedämpften Einbau eines Hilfsaggregates in die Fahrzeugkarosserie. Mit 12 ist ein Behälterunterteil und mit 14 ein Behälterdeckel bezeichnet, die beide aus geschäumten Formteilen bestehen, wobei als Material ein vorzugsweise aus Polyurethan (PUR) bestehender Flockenverbundschaum gewählt worden ist.

Beide Behälterteile 12, 14 sind vorzugsweise trogartig mit nahezu gleichen Abmessungen gestaltet, wobei diese bei geschlossenem Behälter 10 miteinander randseitig derart formschlüssig in Eingriff sind, daß Behälterunterteil 12 und Behälterdeckel 14 gegenseitig exakt zueinander ausgerichtet sind.

Die Behältergestalt richtet sich nach der Raumform des im Behälter 10 zwecks Gerauschdammung bzw. Schwingungsabkopplung von der Karosserie zu deponierenden Aggregates. Im vorliegenden Falle soll der Behälter 10 z.E. eine strichpunktiert angedeutete, quaderförmige Luftpumpe 16 für die Fahrzeugzentralverriegelung aufnehmen.

Behälterunterteil 12 und/oder Behälterdeckel 14 ist vorzugsweise stirnseitig von wenigstens einem Durchbruch durchsetzt, um die Luftpumpe 16 an Anschlußleitungen anschließen zu können. Der Einfachheit halber wurde auf die Darstellung eines solchen Wanddurchbruchs verzichtet.

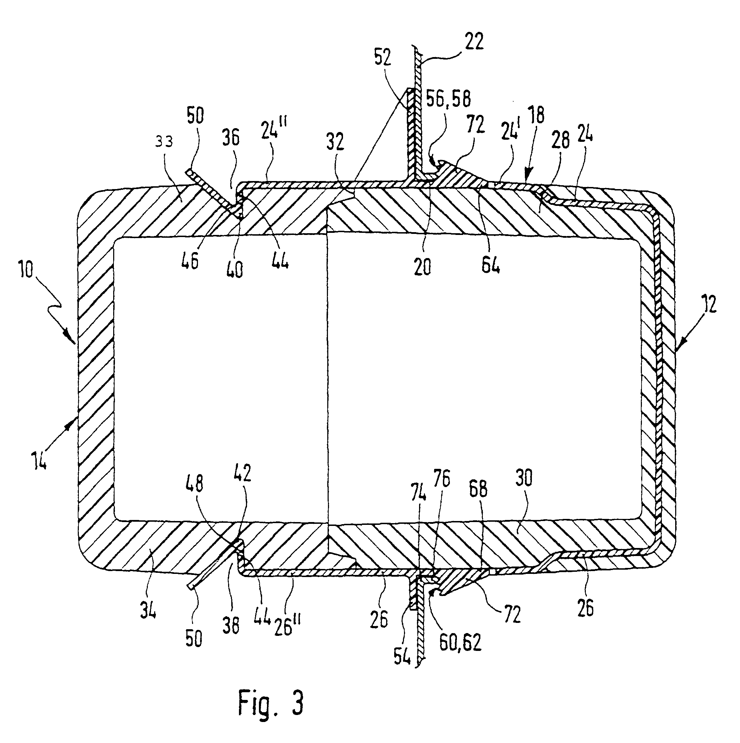

Mit 18 ist als Ganzes ein Halter bezeichnet, mit dessen Hilfe sowohl der Behälterdeckel 14 auf dem Behälterunterteil 12 als auch der Behälter 10 als Ganzes z.B. in einem Durchbruch 20 eines Karosserieteils 22 durch Verklipsen festiegbar ist (siehe Figur 3).

Dieser Halter 18 ist vorzugsweise U-förmig ausgebildet und beispielsweise in den Behälterunterteil 12 durch Einschäumen teilweise integriert, wobei sich dessen U-Schenkel 24 und 26 vorzugsweise an den Längswandteilen 28, 30 des Behälterunterteils 12 befinden.

Jeder U-Schenkel 24, 26 ist schwach nach außen derart schräg abgekröpft, daß er auf einem Teilstück 24' bzw. 26' seiner Länge mit der Außenseite des betreffenden Längswandteiles 28 bzw. 30 plan abschließt und ein sich über den öffnungsrand 32 des Behälterunterteils 12 hinaus erstreckendes Klipselement 24" bzw. 26" bildet.

Der Halter 18 ist vorzugsweise durch ein Formteil aus duroplastischen Kunststoff, vorzugsweise PA6 gebildet, wobei sich dessen, die Klipselemente 24", 26" bildenden, freien Schenkelteilstücke 24', 26' zum Aufsetzen des Behälterdeckels 14 auf das Behalterunterteil 12 zueinander federnd aufweiten lassen. In der Schließstellung des Behälterdeckels 14 rasten hingegen die Klipselemente 24", 26" selbsttätig in Ausnehmungen 36 bzw. 38 der entsprechenden Deckellängswandteile 33 und 34 formschlüssig ein (siehe Figur 3).

Zu diesem Zweck weisen die die beiden Klipselemente 24", 26" bildenden Teilstücke der vorzugsweise relativ breit ausgebildeten U-Schenkel 24, 26 am freien Ende jeweils ein in die entsprechende Ausnehmung 36 bzw. 38 einschnappendes Eingriffsglied 40 bzw. 42 auf. Diese ragen dabei mit einem Teilstück aus dem Deckellängswandteil 33 bzw. 34 heraus, so daß sich die Eingriffsglieder 40, 42 zum Öffnen des Behälters 10 manuell mit dem Behälterdeckel 14 außer Eingriff bringen lassen. Die Eingriffsglieder 40, 42 sind im Querschnitt vorzugsweise V-förmig ausgebildet, wobei sich der eine V-Schenkel 44 vom Endstück des Klipselementes 24" bzw. 26" senkrecht in Richtung auf den Dekkelwandteil 33 bzw. 34 erstreckt und eine in diesen Wandteil eingeformte Abstützschulter 46 bzw. 48 übergreift, während der andere V-Schenkel 50 eine Handhabe zum Außereingriffbringen der Eingriffsglieder 40, 42 bildet, indem er aus der Ausnehmung 36 bzw. 38 entsprechend weit herausragt.

Zum lösbaren Einklipsen des Behälters 10 in den Durchbruch 20 des Karosserieteils 22 sind die Schenkelteilstücke 24', 26' des Halters 18 jeweils mit einem von diesen nach außen abragend angeformten Abstützflansch 52, 54 ausgestattet. Diesen sind im Abstand zu ihrer vom jeweiligen Klipselement 24" bzw. 26" abgekehrten Flanschseite außenseitig vorzugsweise jeweils zwei im Abstand nebeneinander vorgesehene Abstützschultern 56 und 58 bzw. 60 und 62 zugeordnet. Letztere sind jeweils an eine im Schenkelteilstück 24' bzw. 26' freigeschnittene Feterzunge 64, 66 angeformt und vorzugsweise jeweils durch eine Vielzahl von im Abstand nebeneinander angeordneten Stegen 72 gebildet. Diese Stege 72 verjüngen sich in entgegengesetzter Richtung zur jeweils benachbarten Abstützschulter 56 bzw. 58; 60 bzw. 62 keilförmig. Die Steganordnung ermöglicht Kunststoff und somit Gewicht einzusparen und die Reibung beim Verklipsen entsprechend gering zu halten.

Beim Einklipsen des Behälters 10 in den Durchbruch 20 gleiten die Stege 72 der Abstützschultern 56, 58, 60 und 62 am Durchbruchrand 74 auf, wobei die sie tragenden Federzungen 64, 66, 68 und 70 nach innen in das Schaummaterial des Behälterurterteils 12 ausgelenkt und vorgespannt werden. Nach erfolgtem Durchtritt schnappen die Federzungen 64, 66, 68 und 70 wieder in ihre Normallage zurück, wobei die die Abstützschultern 56, 58 bzw. 60, 62 bildenden Stege 72 vorzugsweise einen umgebördelten Randteil 76 des Durchbruchs 74 hintergreifen und so einen spielfreien Sitz des Behälters 10 im Karosserieteil 22 gewährleisten.

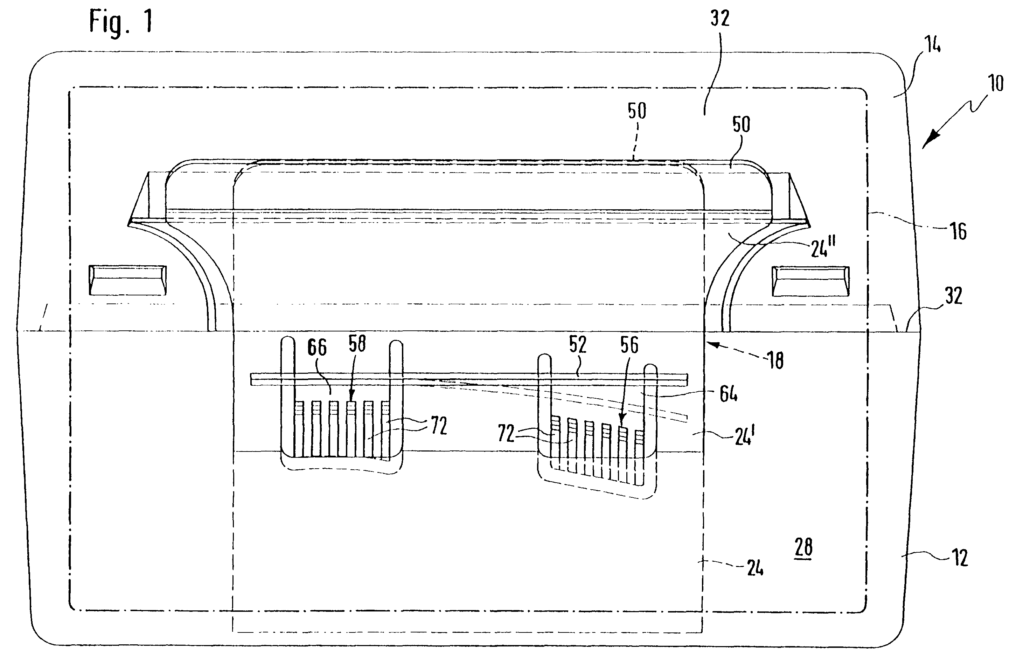

Wie in Figur 1 gestrichelt angedeutet ist, können die Abstütoflansche 52, 54 auch eine von der ebenen Ausbildung abweichende Gestalt haben, um diese an einem entsprechend geformten Karosserieteil 22 formschlüssig zur Anlage zu bringen.

Es ist des weiteren klar, daß die Gestalt des Behälters 10 und des Halters 18 sowie die Art des gegenseitigen Festklipsens beider Behälterteile 12, 14 auch in anderer Weise gegeben sein kann. Wesentlich ist nur, daß der Halter 18 in einen der beiden Behälterteile 10, 12 integriert ist und mit seiner Hilfe die erläuterten Verklipsungen durchführbar sind.

## Patentansprüche

1. Behälter zur geräuschdämpfenden Aufnahme eines in ein Fahrzeug einzubauenden Aggregates, wie Elektromotor, pneumatische Pumpe oder dgl., der aus zwei jeweils durch Schaumteile gebildeten und sich zu einem geschlossenen Gehäuse ergänzenden Behälterteilen besteht und der zur Montage an benachbarten Fahrzeugteilen mit der Fahrzeugkarosserie verklipsbar ist, **gekennzeichnet durch** einen teilweise in den einen Behälterteil (12) **durch** Einschäumen integrierten, U-förmigen Halter (19), dessen U-Schenkel (24, 26) an einander gegenüberliegenden Wandteilen (28, 30) des ihn tragenden Behälterteils (12) jeweils ein sich über dessen Öffnungsrand hinaus erstreckendes Klipselement (24" bzw. 26") zum gegenseitigen Verklipsen beider Behälterteile (12, 14) sowie jeweils einen von diesen Wandteilen (28, 30) nach außen abragenden Flansch (52) bzw. (54) zur Behälterbefestigung in einem Karosseriedurchbruch 20 aufweisen, welchen Flanschen (52, 54) an ihrer vom jeweiligen Klipselement (24" bzw. 26") abgekehrten Seite jeweils wenigstens eine seitlich vom Behälterteil (12) nach außen abragende und an eine im U-Schenkel (24 bzw. 26) freigeschnittene Federzunge (64, 66, 68, 70) angeformte Abstützschulter (56, 58, 60, 62) zugeordnet ist, die sich bei montiertem Behälter (10) an einem sich zwischen Flansch (52 bzw. 54) und Abstützschulter (56, 58, 60, 62) befindenden Randteil (76) des Karosseriedurchbruches (20) abstützt.

2. Behälter nach Anspruch 1, **dadurch gekennzeichnet, dass** der Halter (18) durch ein Kunststoff-Hartteil gebildet ist.

3. Behälter nach Anspruch 2, **dadurch gekennzeichnet, dass** der Halter (18) aus glasfaserverstärktem Polyamid (PA6) gespritzt ist.

4. Behälter nach einem der vorhergehenden Ansprüche, **dadurch gekennzeichnet, dass** die Abstützschultern (56, 58, 60, 62) der U-Schenkel (24, 26) in entgegengesetzter Richtung zum benachbarten Flansch (52 bzw. 54) keilförmig verjüngt ausgebildet sind.

5. Behälter nach Anspruch 4, **dadurch gekennzeichnet, dass** die Abstützschultern (56, 58, 60, 62) jeweils durch eine Vielzahl von in seitlichem Abstand voneinander an die Federzungen (64, 66, 68, 70) der U-Schenkel (24, 26) angeformten Stegen (72) gebildet sind.

6. Behälter nach einem der vorhergehenden Ansprüche, **dadurch gekennzeichnet, dass** die Klipselemente (24", 26") am freien Ende ein sich in Richtung auf den zu verklipsenden Behälterteil (14) rechtwinklig erstreckendes Eingriffsglied (44) aufweisen, das eine in den benachbarten Wandteil (32 bzw. 34) dieses Behälterteils (14) eingeformte Abstützschulter (46 bzw. 48) übergreift.

7. Behälter nach Anspruch 6, **dadurch gekennzeichnet, dass** das Eingriffsglied den einen Schenkel (44) eines im Querschnitt V-förmig ausgebildeten Endstückes der Klipselemente (24", 26") bildet, deren anderer Schenkel (50) über den Wandteil (32 bzw. 34) vorsteht und dass die Abstützschulter (46 bzw. 48) des zu verklipsenden Behälterteils (14) einen Wandteil einer im Querschnitt gleichfalls in etwa V-förmigen Vertiefung (36, 38) dieses Behälterteils 14 bildet, in die das Eingriffsglied (44) formschlüssig einrastbar ist.

8. Behälter nach einem der vorhergehenden Ansprüche, **dadurch gekennzeichnet, dass** die beiden Behälterteile (12, 14) in gegenseitig verklipstem Zustand einen quaderförmigen Behälter (10) bilden und dass der im Querschnitt U-förmige Halter (18) am einen Behälterteil (12) vorgesehen ist, derart, dass sich die Klipselemente (24", 26") seiner U-Schenkel (24, 26) jeweils an einer seiner Längswandteile (28 bzw. 30) über dessen Öffnungsrand hinaus erstrecken.

## Claims

1. A container for the sound-proofing reception of a unit to be fitted in a motor vehicle, such as an electric motor, pneumatic pump, etc., which consists of two container parts each taking the form of pre-formed foam sections which fit together to form a closed housing and which can be clipped to the body shell of the vehicle for mounting on neighbouring vehicle components,
**characterised by**
a U-shaped holder (18) which is partly integrated into one container part (12) by means of foam expansion, the U-limbs (24, 26) of this holder (18) each having, on opposing wall sections (28, 30) of the container part (12) bearing said holder (18), a clip element (24", 26") extending beyond the edge of the opening of said container part for clipping together the two container parts (12, 14) and each having a flange (52, 54) projecting outwards from these wall sections (28, 30) to fix the container in a hole (20) in the body shell, there being assigned to the side of each of said flanges (52, 54) facing away from their respective clip elements (24", 26") at least one supporting shoulder (56, 58, 60, 62) projecting laterally outwards from the container part (12) and integrally formed with a spring tongue (64, 66, 68, 70) cut into the U-limb (24, 26) which is supported on a part (76) of the edge of the hole (20) through the body shell located between the flange (52, 54) and the supporting shoulder (56, 68, 60, 62) when the container (10) is fitted.

2. A container in accordance with claim 1,
**characterised in that**
the holder (18) takes the form of a high-resistance plastic part.

3. A container in accordance with claim 2,
**characterised in that**
the holder (18) is injection moulded from glass fibre reinforced polyamide (PA6).

4. A container in accordance with one of the preceding claims,
**characterised in that**
the supporting shoulders (56, 58, 60, 62) of the U-limbs (24, 26) are designed in such a manner that they taper in a wedge shape away from the neighbouring flanges (52, 54).

5. A container in accordance with claim 4,
**characterised in that**
the supporting shoulders (56, 58, 60, 62) take the form of a multiplicity of laterally spaced webs (72) which are integrally formed with the spring tongues (64, 66, 68, 70) of the U-limbs (24, 26).

6. A container in accordance with one of the preceding claims,
**characterised in that**
the free ends of the clip elements (24", 26") have catches (44) which extend at right angles towards the container part (14) to be clipped and overlap a supporting shoulder (46, 48) which is integrally formed with the neighbouring wall section (32, 34) of this container part (14).

7. A container in accordance with claim 6,
**characterised in that**
the catch forms one limb (44) of an end piece of the clip elements (24", 26") with a V-shaped cross section while the other limb (50) projects beyond the wall section (32, 34), and that the supporting shoulders (46,48) of the container part (14) to be clipped forms a wall section of an indentation (36, 38) in this container part (14) which is also V-shaped in cross section and into which the catch (44) can be engaged in a positive fit.

8. A container in accordance with one of the preceding claims,
**characterised in that**
the when clipped together the two container parts (12, 14) form a rectangular-shaped container (10) and that the holder (18) with its U-shaped cross section is provided on one container part (12) in such a manner that the clip elements (24", 26") on its U-limbs (24, 26) extend along one of its side wall sections (28, 30) beyond the edge of its opening.

## Revendications

1. Récipient pour le logement, avec amortissement du bruit, d'un groupe à monter dans un véhicule, comme un moteur électrique, une pompe pneumatique ou analogue, récipient qui est constitué de deux parties de récipient chacune formée par des pièces de mousse et se complétant pour donner une enceinte fermée et récipient qui peut se clipser avec la carrosserie du véhicule pour le montage sur des parties du véhicule voisines, **caractérisé par** un support en forme de U qui est partiellement intégré dans l'une des parties du récipient (12) par formation de mousse et dont les branches (24, 26) du U présentent chacune, contre les parties de paroi (28, 30) opposées l'une à l'autre de la partie de récipient (12) qui la porte, un élément de clipsage (24" ou 26") qui s'étend au-delà de son bord d'ouverture pour un clipsage mutuel des deux parties de récipient (12, 14) ainsi que, chacune, une aile (52) ou (54) qui, depuis ces parties de paroi (28, 30), s'oriente vers l'extérieur pour la fixation du récipient dans une découpe de carrosserie (20), ailes (52, 54) à chacune desquelles, de son côté opposé à l'élément de clipsage respectif (24" ou 26"), est associé au moins un épaulement d'appui (56, 58, 60, 62) qui est orienté vers l'extérieur latéralement à la partie (12) du récipient et formé sur une languette élastique (64, 66, 68, 70) découpée, avec une extrémité libre, dans une branche du U (24 ou 26) et qui, le récipient (10) étant monté, s'appuie sur une partie de bordure (76) de la découpe de la carrosserie (20) qui se trouve entre aile (52 ou 54) et épaulement d'appui (56, 58, 60, 62).

2. Récipient selon la revendication 1, **caractérisé par le fait que** le support (18) est formé par une pièce en matière plastique dure.

3. Récipient selon la revendication 2, **caractérisé par le fait que** le support (18) est extrudé en polyamide armé de fibres de verre (PA6).

4. Récipient selon l'une des revendications précédentes, **caractérisé par le fait que** les épaulements d'appui (56, 58, 60 62) des branches du U (24, 26) sont conçus en diminuant en forme de coin en direction opposée à l'aile voisine (52 ou 54).

5. Récipient selon la revendication 4, **caractérisé par le fait que** les épaulements d'appui (56, 58, 60, 62) sont chacun formés par une pluralité de barrettes (72) formées à distance l'une de l'autre selon la direction latérale, sur les languettes élastiques (64, 66, 68, 70) des branches du U (24, 26).

6. Récipient selon l'une des revendications précédentes, **caractérisé par le fait que** les éléments de clipsage (24", 26") présentent, à l'extrémité libre, un élément de prise (44) qui s'étend perpendiculairement en direction de la partie du récipient (14) à clipser et vient en prise, par dessus, avec un épaulement d'appui (46 ou 48) formé dans la partie de paroi voisine (32 ou 34) de cette partie de récipient (14).

7. Récipient selon la revendication 6, **caractérisé par le fait que** l'élément de prise forme la première branche (44) d'un morceau d'extrémité, conçu en coupe en forme de V, des éléments de clipsage (24", 26") dont l'autre branche (50) dépasse au-delà de la partie de paroi (32 ou 34) et que l'épaulement d'appui (46 ou 48) de la partie de récipient (14) à clipser forme une partie de paroi d'un évidement (36, 38), également à peu près en forme de V en coupe, de cette partie de récipient (14) dans laquelle l'élément de prise (44) peut s'encliqueter par complémentarité de forme.

8. Récipient selon l'une des revendications précédentes, **caractérisé par le fait que** les deux parties de récipient (12, 14) forment, à l'état mutuellement clipsé, un récipient (10) en forme de parallélépipède rectangle et que le support (18) en forme de U en coupe est prévu sur une partie de récipient (12) de façon que les éléments de clipsage (24", 26") de sa branche en U (24, 26) s'étendent chacun, sur l'une de ses parties de paroi longitudinales (28 ou 30), au-delà de son bord d'ouverture.
